# EUROPEAN PATENT APPLICATION

(11) **EP 4 831 219 A1**
(43) Date of publication of application: **28.10.2026**
(21) Application number: 24907000.4
(22) Date of filing: 13.11.2024
(51) Int. Cl.: C08G 59/40, C08J 5/24, F16J 12/00

(54) **THERMOSETTING RESIN COMPOSITION, CURED PRODUCT THEREOF, PREPREG, FIBER-REINFORCED COMPOSITE MATERIAL, AND HIGH-PRESSURE GAS CONTAINER**

(30) Priority: 18.12.2023 JP 2023213330
(71) Applicant: MITSUBISHI GAS CHEMICAL COMPANY, INC., Chiyoda-ku Tokyo 100-8324 (JP)
(72) Inventor: WAKAHARA, Daiki, Hiratsuka-shi, Kanagawa 254-0016 (JP); IKEUCHI, Kousuke, Hiratsuka-shi, Kanagawa 254-0016 (JP)
(74) Representative: Vossius & Partner Patentanwälte Rechtsanwälte mbB
(86) International application number: PCT/JP2024/040239
(87) International publication number: WO 2025/134612

(57) **Abstract**

A thermosetting resin composition containing component (A): a polyfunctional epoxy resin, component (B): a (meth)acrylate compound having no glycidyl group, component (C): a compound having a (meth)acryloyloxy group and a glycidyl group, component (D): an epoxy resin curing agent containing a boron amine complex, and component (E): a thermal radical polymerization initiator; a cured product thereof; a prepreg containing the thermosetting resin composition; a fiber-reinforced composite material; and a high-pressure gas container.

## Description

### Technical Field

The present invention relates to a thermosetting resin composition and a cured product thereof, a prepreg, a fiber-reinforced composite material, and a high-pressure gas container.

### Background Art

In recent years, environmentally friendly natural gas vehicles (CNG vehicles) and fuel cell vehicles (FCV) are becoming more popular. Fuel cell vehicles use fuel cells as their power sources, and thus it is essential to construct hydrogen stations where hydrogen as the fuel thereof is compressed to a high pressure and filled into the vehicles.

Steel tanks have been used so far as high pressure gas storage tanks for hydrogen stations for fuel cell vehicles, or automotive fuel tanks for vehicles such as CNG vehicles and fuel cell vehicles; however, a lighter high pressure gas storage tank using a resin material for the tank liner or an outer layer thereof is under development. Weight reduction of automotive fuel tanks provides benefits including capability of improving fuel efficiency of the vehicles equipped therewith.

A pressure vessel such as a high pressure gas storage tank usually has a metallic liner and an outer layer provided so as to cover an outer surface of the liner; however, in recent years, a plastic liner pressure vessel and a linerless pressure vessel are also being studied in order to create a lighter weight pressure vessel.

As a manufacturing method of pressure vessels, there is known a method of manufacturing a pressure vessel through filament winding molding by using a tow prepreg (also referred to as tow-preg) having reinforcing fibers pre-impregnated with an epoxy resin composition.

Prepregs and curable resin compositions suitable for prepregs are also being investigated. For example, Patent Document 1 discloses, as a prepreg useful for molding a fiber-reinforced plastic having high strength and high toughness, a prepreg containing carbon fibers and a matrix resin, in which the matrix resin is a curable resin composition containing a bisphenol-type epoxy resin, (meth)acrylate compounds having two or more functional groups, and a curing agent containing dicyandiamide and a radical polymerization agent, and a cured product of the curable resin composition has a predetermined bending elastic modulus and breaking elongation. There is also described a method of producing a tubular body by winding the prepreg around a mandrel.

Patent Document 2 discloses, as a curable resin composition for a prepreg useful for molding a fiber-reinforced plastic having high strength and high toughness, a curable resin composition containing two types of epoxy resins satisfying predetermined requirements, (meth)acrylate compounds having two or more functional groups, and a curing agent.

### Citation List

### Patent Document

Patent Document 1: JP 6993549 B
Patent Document 2: JP 2022-27815 A

### Summary of Invention

### Technical Problem

The thermosetting resin composition used for the matrix resin of a prepreg is required to have a long pot life in order to ensure the long shelf life of the prepreg. Moreover, in order to ensure heat resistance and high toughness in the fiber-reinforced composite material obtained by curing the prepreg, the thermosetting resin composition used for the matrix resin of the prepreg is required to provide a cured product thereof having both high glass transition temperature and high elongation percentage. However, it is difficult to satisfy all of these required characteristics by the techniques disclosed in Patent Documents 1 and 2.

On the other hand, an increased elongation percentage of a cured product of the thermosetting resin composition generally tends to reduce the tensile stress and the tensile modulus of elasticity of the cured product.

Accordingly, an object of the present invention is to provide: a thermosetting resin composition which can provide a cured product having a high glass transition temperature, a high elongation percentage, a high tensile stress, and a high tensile modulus of elasticity and has a long pot life; a cured product thereof; a prepreg containing the thermosetting resin composition; a fiber-reinforced composite material; and a high-pressure gas container.

### Solution to Problem

The present inventors have found that the problems set forth above can be solved by a thermosetting resin composition containing a polyfunctional epoxy resin, a (meth)acrylate compound having no glycidyl group, a compound having a (meth)acryloyloxy group and a glycidyl group, a predetermined epoxy resin curing agent, and a thermal radical polymerization initiator.

That is, the present invention relates to the following.
[1] A thermosetting resin composition containing:
   component (A): a polyfunctional epoxy resin;
   component (B): a (meth)acrylate compound having no glycidyl group;
   component (C): a compound having a (meth)acryloyloxy group and a glycidyl group;
   component (D): an epoxy resin curing agent containing a boron amine complex; and
   component (E): a thermal radical polymerization initiator.
[2] The thermosetting resin composition according to [1], wherein the component (B) contains component (B1): a poly(butadiene-CO-acrylonitrile) having a (meth)acryloyloxy group each at both termini.
[3] The thermosetting resin composition according to [1] or [2], wherein the component (B) contains component (B2): a polyfunctional (meth)acrylate having an aromatic ring.
[4] The thermosetting resin composition according to any one of [1] to [3], wherein the component (C) contains a compound represented by the following general formula (1): 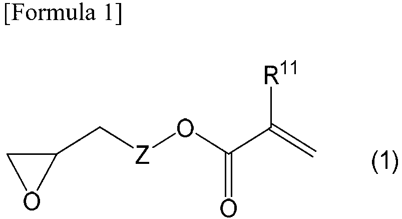
   wherein in the formula (1), R¹¹ represents a hydrogen atom or a methyl group, and Z is a single bond, -(CH₂)ₘ-O- (m is a number of from 2 to 8), or a divalent group represented by the following general formula (2): 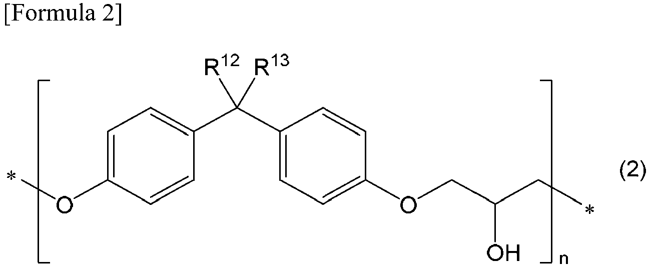
   wherein in the formula (2), R¹² and R¹³ each independently represent a hydrogen atom or a methyl group, n is a number of from 1 to 5, and * represents a bonding site.
[5] The thermosetting resin composition according to any one of [1] to [4], wherein the amine component in the boron amine complex is a trialkylamine.
[6] A cured product of the thermosetting resin composition according to any one of [1] to [5].
[7] A prepreg containing: the thermosetting resin composition according to any one of [1] to [5]; and reinforcing fibers.
[8] The prepreg according to [7], wherein the reinforcing fiber is at least one selected from the group consisting of carbon fibers, glass fibers, and basalt fibers.
[9] The prepreg according to [7] or [8], wherein the prepreg is a tow prepreg or a tape prepreg.
[10] A fiber-reinforced composite material which is a cured product of the prepreg according to any one of [7] to [9].
[11] A high-pressure gas container including the fiber-reinforced composite material according to [10].

### Advantageous Effects of Invention

The present invention can provide: a thermosetting resin composition which can provide a cured product having a high glass transition temperature, a high elongation percentage, a high tensile stress, and a high tensile modulus of elasticity and has a long pot life; a cured product thereof; a prepreg containing the thermosetting resin composition; a fiber-reinforced composite material; and a high-pressure gas container.

### Description of Embodiments

### [Definitions]

As used herein, the "(meth)acryloyloxy group" includes both an acryloyloxy group and a methacryloyloxy group. The same holds true for "(meth)acrylate", "(meth)acrylic acid", and the like.

As used herein, "room temperature" means 23°C unless otherwise specified.

### [Thermosetting resin composition]

The thermosetting resin composition of the present invention (hereinafter, also simply referred to as "composition of the present invention") contains
component (A): a polyfunctional epoxy resin,
component (B): a (meth)acrylate compound having no glycidyl group,
component (C): a compound having a (meth)acryloyloxy group and a glycidyl group,
component (D): an epoxy resin curing agent containing a boron amine complex, and
component (E): a thermal radical polymerization initiator.

The composition of the present invention has the composition set forth above and thus provides a cured product having a high glass transition temperature (Tg), a high elongation percentage, a high tensile stress, and a high tensile modulus of elasticity and furthermore the composition has a long pot life.

The reason why the effect set forth above can be achieved in the present invention is not clear, but it can be considered as follows.

The thermosetting resin composition of the present invention contains as thermosetting resins the polyfunctional epoxy resin (A), the (meth)acrylate compound (B) having no glycidyl group, and the compound (C) having a (meth)acryloyloxy group and a glycidyl group. The epoxy resin curing agent (D) is a curing agent for the component (A) and the component (C), and the thermal radical polymerization initiator (E) acts as a thermal radical polymerization initiator for curing the component (B) and the component (C).

A thermosetting (epoxy) resin composition including an epoxy resin and an epoxy resin curing agent is generally excellent in curability, heat resistance, and the like, but there has been a problem of low elongation percentage of a cured product thereof for the intended use which is required to have high toughness. In addition, the epoxy resin composition usually cures rapidly, and hence an improvement in pot life is also needed, in particular, for use in prepregs to be stored at room temperature.

The component (D) used in the thermosetting resin composition of the present invention contains a boron amine complex, and thus the pot life is increased. Moreover, it is believed that the thermosetting resin composition of the present invention is a hybrid of an epoxy resin curing system of the component (A) - the component (D) and a (meth)acrylate curing system of the component (B) - the component (E), whereby the elongation percentage of a cured product is increased compared to the case of the epoxy resin curing system alone and furthermore the decrease of the pot life of the composition caused by high reactivity between the component (A) and the epoxy resin curing agent can be suppressed.

Besides, the component (C) used in the present invention has a (meth)acryloyloxy group and a glycidyl group and is capable of reacting with both the component (A) and the component (B) and thus acts as a cross-linking agent for the component (A) and the component (B). It is thus believed that the tensile stress and the tensile modulus of elasticity of the resulting cured product are more improved.

### <Component (A): Polyfunctional epoxy resin>

The polyfunctional epoxy resin (A) used in the present invention is not particularly limited as long as it is an epoxy resin having no (meth)acryloyloxy group and having two or more epoxy groups, but from a point of view of improving Tg, the tensile stress, and the tensile modulus of elasticity of the cured product, a polyfunctional epoxy resin containing an aromatic ring or alicyclic structure in the molecule is preferable.

As specific examples of the polyfunctional epoxy resin (A), mention may be made of at least one selected from the group consisting of a polyfunctional epoxy resin having a glycidylamino group derived from metaxylylenediamine, a polyfunctional epoxy resin having a glycidylamino group derived from paraxylylenediamine, a polyfunctional epoxy resin having a glycidylamino group derived from 1,3-bis(aminomethyl)cyclohexane, a polyfunctional epoxy resin having a glycidylamino group derived from 1,4-bis(aminomethyl)cyclohexane, a polyfunctional epoxy resin having a glycidylamino group derived from diaminodiphenylmethane, a polyfunctional epoxy resin having a glycidyloxy group and/or a glycidylamino group derived from paraaminophenol, a polyfunctional epoxy resin having a glycidyloxy group derived from resorcinol, a polyfunctional epoxy resin having a glycidyloxy group derived from bisphenol A, or a hydrogenation product thereof, a polyfunctional epoxy resin having a glycidyloxy group derived from bisphenol F, or a hydrogenation product thereof, and a polyfunctional epoxy resin having a glycidyloxy group derived from phenol novolac. The polyfunctional epoxy resin may be used alone or two or more types thereof may be used in combination.

Among the above, from a point of view of improving Tg, the tensile stress, and the tensile modulus of elasticity of the cured product, the polyfunctional epoxy resin (A) preferably contains, as a main component, at least one selected from the group consisting of a polyfunctional epoxy resin having a glycidylamino group derived from metaxylylenediamine, a polyfunctional epoxy resin having a glycidylamino group derived from paraxylylenediamine, a polyfunctional epoxy resin having a glycidyloxy group derived from bisphenol A, and a polyfunctional epoxy resin having a glycidyloxy group derived from bisphenol F; and the epoxy resin (A) more preferably contains, as a main component, at least one selected from the group consisting of an epoxy resin having a glycidyloxy group derived from bisphenol A and an epoxy resin having a glycidyloxy group derived from bisphenol F.

Note that, the term "main component" as used herein means that other components may be contained without departing from the spirit of the present invention, and means that the main component is contained in an amount preferably from 50 to 100 mass%, more preferably from 70 to 100 mass%, and further preferably from 90 to 100 mass% based on the whole.

The polyfunctional epoxy resin having a glycidyloxy group derived from bisphenol A is bisphenol A diglycidyl ether or an oligomer thereof and is preferably a polyfunctional epoxy resin represented by the following structural formula: 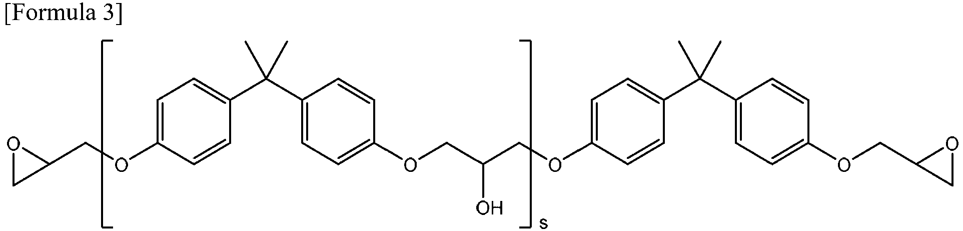 wherein s represents an average number of repeating units and is a number of from 0 to 20.

From a point of view of improving Tg, the tensile stress, and the tensile modulus of elasticity of the cured product, s in the formula is preferably from 0 to 15, more preferably from 0 to 10, further preferably from 0.05 to 10, and even more preferably from 0.10 to 8.0.

The polyfunctional epoxy resin having a glycidyloxy group derived from bisphenol F is bisphenol F diglycidyl ether or an oligomer thereof and is preferably a polyfunctional epoxy resin represented by the following structural formula: 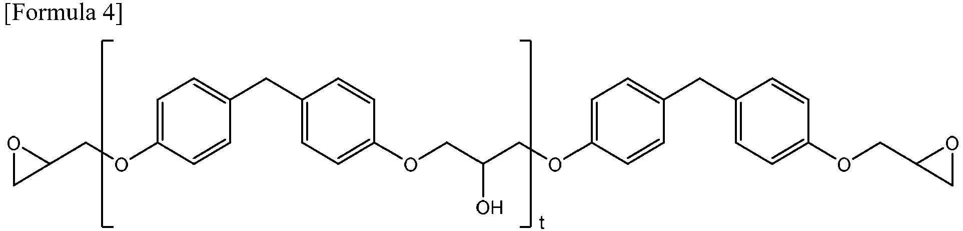 wherein t represents an average number of repeating units and is a number of from 0 to 20.

From a point of view of improving Tg of the cured product, t in the formula is preferably from 0 to 15, more preferably from 0 to 10, and further preferably from 0 to 8.0.

The polyfunctional epoxy resin (A) may be either a solid epoxy resin or a liquid epoxy resin, but the polyfunctional epoxy resin (A) preferably contains a liquid epoxy resin from the point of view that an impregnation into reinforcing fibers is easy when the polyfunctional epoxy resin (A) is applied to a prepreg. The "solid epoxy resin" refers to an epoxy resin having no fluidity at 25°C, while the "liquid epoxy resin" refers to an epoxy resin having fluidity at 25°C.

The content of the liquid epoxy resin in the polyfunctional epoxy resin (A) is preferably 30 mass% or more, more preferably 50 mass% or more, further preferably 60 mass% or more, even more preferably 70 mass% or more, even more preferably 80 mass% or more, even more preferably 85 mass% or more, even more preferably 90 mass% or more, and 100 mass% or less from a point of view of improving impregnating ability into a reinforcing fiber.

The epoxy equivalent (functional group equivalent) of the polyfunctional epoxy resin (A) is not particularly limited, but is preferably 1500 g/equivalent or less, more preferably 1200 g/equivalent or less, further preferably 1000 g/equivalent or less, even more preferably 800 g/equivalent or less, even more preferably 500 g/equivalent or less, even more preferably 350 g/equivalent or less, and even more preferably 250 g/equivalent or less from a point of view of facilitating impregnation into reinforcing fibers when applying the epoxy resin (A) to a prepreg, and is preferably 120 g/equivalent or more from a point of view of improving curability.

When a mixture of two or more epoxy resins is used as the polyfunctional epoxy resin (A), the epoxy equivalent of the polyfunctional epoxy resin (A) means the epoxy equivalent of the mixture.

As for the component (A), commercially available products such as "jER825", "jER827", "jER828", "jER834", "jER1001", and "jER1004", which are available from Mitsubishi Chemical Corporation, can be used as the polyfunctional epoxy resin having a glycidyloxy group derived from bisphenol A, and commercially available products such as "jER806", "jER806H", "jER807", "jER4005P", "jER4007P", and "jER4010P", which are available from Mitsubishi Chemical Corporation, can be used as the polyfunctional epoxy resin having a glycidyloxy group derived from bisphenol F.

### <Component (B): (Meth)acrylate compound having no glycidyl group>

The component (B) used in the present invention is a (meth)acrylate compound having no glycidyl group.

The component (B) may be a compound having no glycidyl group and having at least one (meth)acryloyloxy group, but from a point of view of improving Tg, the elongation percentage, the tensile stress, and the tensile modulus of elasticity of the cured product, preferably contains a polyfunctional (meth)acrylate compound having two or more (meth)acryloyloxy groups. The number of (meth)acryloyloxy groups included in the polyfunctional (meth)acrylate compound is preferably from 2 to 6, more preferably from 2 to 4, further preferably from 2 to 3, and even more preferably 2. When the number of (meth)acryloyloxy groups included in the polyfunctional (meth)acrylate compound is 2 or more, it is easy to contribute to the improvement of Tg, the tensile stress, and the tensile modulus of elasticity of the cured product, and when the number of (meth)acryloyloxy groups is 6 or less, the decrease of the elongation percentage of the cured product can be suppressed.

The content of the polyfunctional (meth)acrylate compound in the component (B) is preferably 50 mass% or more, more preferably 60 mass% or more, further preferably 70 mass% or more, even more preferably 80 mass% or more, even more preferably 90 mass% or more, even more preferably 95 mass% or more, even more preferably 98 mass% or more, and 100 mass% or less from a point of view of improving Tg, the elongation percentage, the tensile stress, and the tensile modulus of elasticity of the cured product.

From a point of view of improving Tg, the elongation percentage, the tensile stress, and the tensile modulus of elasticity of the cured product, the component (B) preferably contains, as the polyfunctional (meth)acrylate compound, at least one selected from the group consisting of component (B1): a poly(butadiene-CO-acrylonitrile) having a (meth)acryloyloxy group each at both termini and component (B2): a polyfunctional (meth)acrylate having an aromatic ring and more preferably contains both the component (B1) and the component (B2).

### (Component (B 1): Poly(butadiene-CO-acrylonitrile) having a (meth)acryloyloxy group each at both termini)

From a point of view of improving the elongation percentage of the cured product, the component (B) preferably contains, as the polyfunctional (meth)acrylate compound, component (B1): a poly(butadiene-CO-acrylonitrile) having a (meth)acryloyloxy group each at both termini. The component (B1) has a highly flexible structure and it is thus believed that the decrease of an elongation percentage can be suppressed even for a cured product having a high cross-link density.

The component (B1) used in the present invention is a di(meth)acrylate having a (meth)acryloyloxy group each at both termini of a main chain containing a copolymerized structure of butadiene and acrylonitrile.

The content of the constitutional unit derived from acrylonitrile in the component (B1) is preferably from 5 to 50 mass%, more preferably from 10 to 30 mass%, and further preferably from 10 to 25 mass% from a point of view of improving Tg, the elongation percentage, the tensile stress, and the tensile modulus of elasticity of the cured product.

The weight average molecular weight (Mw) of the component (B1) is preferably from 1000 to 30000, more preferably from 2000 to 10000, and further preferably from 3000 to 8000. When the Mw is 1000 or more, it is easy to contribute to the improvement of the elongation percentage of the cured product, and when the Mw is 30000 or less, it is easy to suppress the decrease of Tg, the tensile stress, and the tensile modulus of elasticity of the cured product.

Examples of commercially available products of the component (B1) include "Hypro 1300X33LC" available from CHORI GLEX Co., Ltd.

The content of the component (B1) in the component (B) is preferably from 1 to 70 mass%, more preferably from 5 to 70 mass%, further preferably from 10 to 70 mass%, even more preferably from 15 to 70 mass%, even more preferably from 15 to 60 mass%, even more preferably from 15 to 50 mass%, even more preferably from 15 to 35 mass%, even more preferably from 15 to 25 mass%, and even more preferably from 15 to 20 mass%. When the content of the component (B1) in the component (B) is 1 mass% or more, it is easy to contribute to the improvement of the elongation percentage of the cured product, and when the content is 70 mass% or less, the decrease of Tg, the tensile stress, and the tensile modulus of elasticity of the cured product can be suppressed.

### (Component (B2): Polyfunctional (meth)acrylate having an aromatic ring)

From a point of view of improving Tg, the elongation percentage, the tensile stress, and the tensile modulus of elasticity of the cured product, the component (B) preferably contains, as the polyfunctional (meth)acrylate compound, component (B2): a polyfunctional (meth)acrylate having an aromatic ring.

The number of (meth)acryloyloxy groups included in the component (B2) is preferably from 2 to 6, more preferably from 2 to 4, further preferably from 2 to 3, and even more preferably 2. When the number of (meth)acryloyloxy groups included in the component (B2) is 2 or more, it is easy to contribute to the improvement of Tg, the tensile stress, and the tensile modulus of elasticity of the cured product, and when the number of (meth)acryloyloxy groups is 6 or less, the decrease of the elongation percentage of the cured product can be suppressed.

The aromatic ring included in the component (B2) may be a single ring or a fused ring, and examples thereof include a benzene ring, a naphthalene ring, an anthracene ring, and a tetracene ring, but are not limited thereto. Among them, at least one selected from the group consisting of a benzene ring and a naphthalene ring is preferable, and a benzene ring is more preferable.

The number of aromatic rings included in the component (B2) may be 1 or more, and is preferably 2 or more from a point of view of improving Tg, the elongation percentage, the tensile stress, and the tensile modulus of elasticity of the cured product.

Specific examples of the polyfunctional (meth)acrylate having an aromatic ring, which is used as the component (B2), include polyfunctional (meth)acrylate having a structure derived from biphenol, polyfunctional (meth)acrylate having a structure derived from bisphenol A, polyfunctional (meth)acrylate having a structure derived from bisphenol F, polyfunctional (meth)acrylate having a fluorene structure, and polyfunctional (meth)acrylate having a structure derived from an aromatic hydrocarbon formaldehyde resin, and one type or two or more types of these can be used.

Among the above, from a point of view of improving Tg, the elongation percentage, the tensile stress, and the tensile modulus of elasticity of the cured product, the component (B2) preferably contains at least one selected from the group consisting of polyfunctional (meth)acrylate having a structure derived from bisphenol A, polyfunctional (meth)acrylate having a structure derived from bisphenol F, and polyfunctional (meth)acrylate having a structure derived from an aromatic hydrocarbon formaldehyde resin, more preferably contains at least one selected from the group consisting of polyfunctional (meth)acrylate having a structure derived from bisphenol A and polyfunctional (meth)acrylate having a structure derived from an aromatic hydrocarbon formaldehyde resin, and further preferably contains polyfunctional (meth)acrylate having a structure derived from bisphenol A.

The polyfunctional (meth)acrylate may be any of polyester (meth)acrylate having a main skeleton derived from a polyol, epoxy (meth)acrylate having a main skeleton derived from an epoxy compound, urethane (meth)acrylate having a main skeleton derived from a polyisocyanate, but is preferably at least one selected from the group consisting of polyester (meth)acrylate and epoxy (meth)acrylate.

The aromatic hydrocarbon formaldehyde resin is a resin obtained by reacting an aromatic hydrocarbon with formaldehyde. As the aromatic hydrocarbon, mention may be made of at least one selected from the group consisting of benzene, xylene, toluene, mesitylene, pseudocumene, ethylbenzene, propylbenzene, decylbenzene, cyclohexylbenzene, biphenyl, methylbiphenyl, naphthalene, methylnaphthalene, dimethylnaphthalene, ethylnaphthalene, anthracene, methylanthracene, dimethylanthracene, ethylanthracene, and binaphthyl, and the aromatic hydrocarbon is preferably at least one selected from the group consisting of xylene, toluene, and mesitylene, and more preferably xylene. Note that, the xylene formaldehyde resin is also referred to as a "xylene resin", the toluene formaldehyde resin is also referred to as a "toluene resin", and the mesitylene formaldehyde resin is also referred to as a "mesitylene resin".

From a point of view of improving Tg, the elongation percentage, the tensile stress, and the tensile modulus of elasticity of the cured product, the polyfunctional (meth)acrylate having an aromatic ring, which is used as the component (B2), even more preferably contains at least one selected from the group consisting of a compound represented by the following general formula (B2-1), a compound represented by the following general formula (B2-2), a compound represented by the following general formula (B2-3), and polyfunctional (meth)acrylate having a structure derived from an aromatic hydrocarbon formaldehyde resin, even more preferably contains at least one selected from the group consisting of a compound represented by the following general formula (B2-1) and a compound represented by the following general formula (B2-2), and even more preferably contains a compound represented by the following general formula (B2-1):

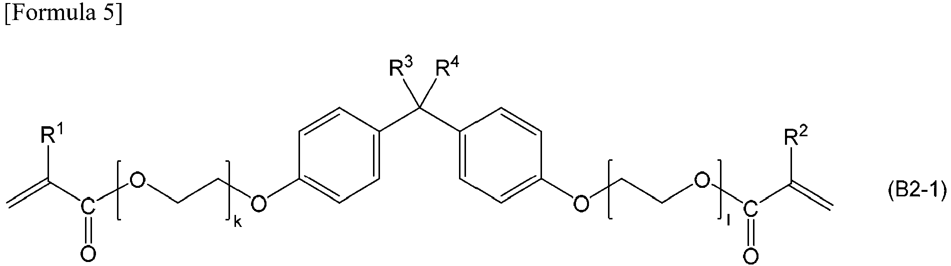

In the formula, R¹ and R² each independently represent a hydrogen atom or a methyl group, and R³ and R⁴ each independently represent a hydrogen atom or a methyl group. k and l represent the number of repeating units, and each independently represent the number of from 0 to 20.

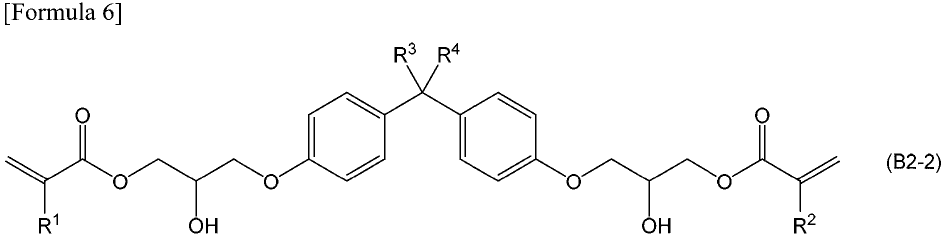

In the formula, R¹ to R⁴ are the same as defined above.

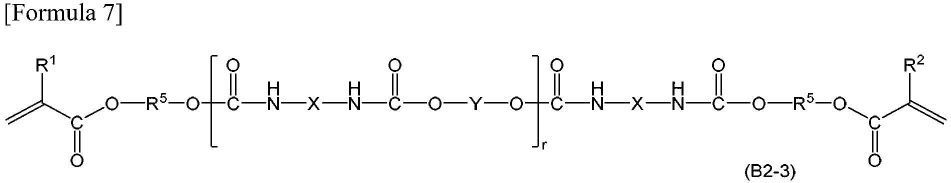

In the formula, R¹ and R² are the same as defined above, and R⁵ is an alkylene group having from 2 to 6 carbons. X is a residue of a diisocyanate and Y is a residue of a diol. Either of X or Y contains an aromatic ring. r represents the number of repeating units, and is a number greater than or equal to 1. (r + 1) units of X and r units of Y may be all the same or different from each other.

In the general formula (B2-1), R¹ and R² each are preferably a methyl group, and R³ and R⁴ each are preferably a methyl group.

From a point of view of improving Tg, the elongation percentage, the tensile stress, and the tensile modulus of elasticity of the cured product, k and l in the general formula (B2-1) are each independently a number of preferably from 1 to 15, more preferably from 1 to 10, and further preferably from 2 to 6. k + l is a number of from 0 to 40 and is a number of preferably from 2 to 30, more preferably from 2 to 20, further preferably from 4 to 20, and even more preferably from 8 to 20 from a point of view of improving Tg, the elongation percentage, the tensile stress, and the tensile modulus of elasticity of the cured product.

Commercially available products such as "BPE-500" and "BPE-900", which are available from Shin-Nakamura Chemical Co., Ltd., can be used as the compound represented by the general formula (B2-1).

In the general formula (B2-2), each of R¹ and R² is preferably a methyl group, and each of R³ and R⁴ is preferably a methyl group. Specific examples of the compound represented by the general formula (B2-2) include a (meth)acrylic acid adduct of bisphenol A diglycidyl ether [bisphenol A-type epoxy di(meth)acrylate], a (meth)acrylic acid adduct of bisphenol F diglycidyl ether [bisphenol F-type epoxy di(meth)acrylate]. The compound is preferably bisphenol A-type epoxy di(meth)acrylate, and more preferably bisphenol A-type epoxy dimethacrylate.

In the general formula (B2-3), R¹ and R² each are preferably a methyl group. R⁵ is an alkylene group having from 2 to 6 carbons, and the alkylene group may be either linear or branched. R⁵ is an alkylene group preferably having from 2 to 4 carbons, more preferably having from 2 to 3 carbon atoms.

X in the general formula (B2-3) is a divalent group and is a residue of a diisocyanate represented by OCN-X-NCO. Examples of the diisocyanate include: chain aliphatic diisocyanates such as trimethylene diisocyanate, tetramethylene diisocyanate, 1,3-pentamethylene diisocyanate, 1,5-pentamethylene diisocyanate, hexamethylene diisocyanate, 1,2-propylene diisocyanate, 1,2-butylene diisocyanate, 2,3-butylene diisocyanate, 1,3-butylene diisocyanate, 2-methyl-1,5-pentamethylene diisocyanate, and 3-methyl-1,5-pentamethylene diisocyanate; aliphatic diisocyanates containing an alicyclic structure, such as 1,3-cyclopentane diisocyanate, 1,4-cyclohexane diisocyanate, 1,3-cyclohexane diisocyanate, methyl-2,4-cyclohexane diisocyanate, methyl-2,6-cyclohexane diisocyanate, 1,2-bis (isocyanatomethyl) cyclohexane, 1,3-bis (isocyanatomethyl) cyclohexane, isophorone diisocyanate, and norbornane diisocyanate; and diisocyanates containing an aromatic ring, such as m-phenylene diisocyanate, p-phenylene diisocyanate, m-xylylene diisocyanate, p-xylylene diisocyanate, 2,4-tolylene diisocyanate, 2,6-tolylene diisocyanate, naphthylene-1,4-diisocyanate, and naphthylene-1,5-diisocyanate. These diisocyanates may be used alone or two or more types thereof may be used in combination.

When Y in the general formula (B2-3) does not include an aromatic ring, the diisocyanate is a diisocyanate including an aromatic ring. When Y in the general formula (B2-3) contains an aromatic ring, from a point of view of improving the elongation percentage of the cured product, the diisocyanate is preferably at least one selected from the group consisting of a chain aliphatic diisocyanate and an aliphatic diisocyanate containing an alicyclic structure, more preferably at least one selected from the group consisting of hexamethylene diisocyanate, 1,2-bis(isocyanatomethyl) cyclohexane, 1,3-bis(isocyanatomethyl) cyclohexane, and isophorone diisocyanate, and further preferably hexamethylene diisocyanate.

Y in the general formula (B2-3) is a divalent group and is a residue of a diol represented by HO-Y-OH. Examples of the diol include: chain aliphatic diols such as ethylene glycol, propylene glycol, 1,3-propanediol, 1,4-butanediol, 1,5-pentanediol, 1,6-hexanediol, 3-methyl-1,5-pentanediol, 2-ethyl-1,3-hexanediol, diethylene glycol, triethylene glycol, polyethylene glycol, polypropylene glycol, and polytetramethylene glycol; diols containing an alicyclic structure, such as cyclohexanedimethanol and tricyclodecane dimethanol; diols containing an aromatic ring, such as biphenol, bisphenol A, bisphenol F, bisphenoxyfluorene ethanol, and diols obtained by adding ethylene oxide, propylene oxide, or caprolactone to these diols. These diols may be used alone or two or more types thereof may be used in combination.

From a point of view of improving Tg, the elongation percentage, the tensile stress, and the tensile modulus of elasticity of the cured product, the diol is preferably at least one selected from the group consisting of chain aliphatic diols and diols containing an aromatic ring, more preferably a diol containing an aromatic ring, and further preferably at least one selected from the group consisting of bisphenol A, bisphenol F, and diols obtained by adding ethylene oxide or propylene oxide thereto.

Y in the general formula (B2-3) is more preferably a divalent group represented by the following general formula (Y1).

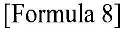

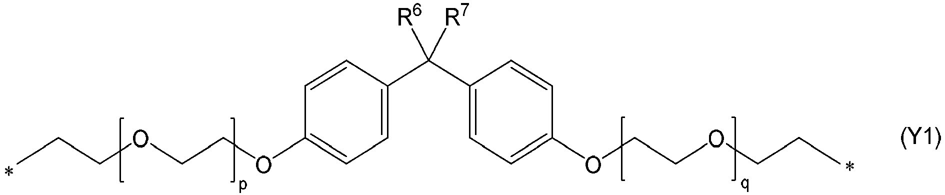

In the formula, R⁶ and R⁷ each independently represent a hydrogen atom or a methyl group, preferably a methyl group. p and q represent the number of repeating units, and each independently represent the number of from 0 to 20. * represents a bonding site.

r in the general formula (B2-3) is a number of 1 or more and is preferably a number of 1 or more and 200 or less.

Examples of a commercially available product of polyfunctional (meth)acrylate having a structure derived from an aromatic hydrocarbon formaldehyde resin, which is used as the component (B2), include "NIKANOL XUAT" (urethane acrylate xylene resin) available from Fudow Company Limited.

The content of the component (B2) in the component (B) is preferably from 30 to 99 mass%, more preferably from 30 to 95 mass%, further preferably from 30 to 90 mass%, even more preferably from 30 to 85 mass%, even more preferably from 40 to 85 mass%, even more preferably from 50 to 85 mass%, even more preferably from 65 to 85 mass%, even more preferably from 75 to 85 mass%, and even more preferably from 80 to 85 mass%. When the content of the component (B2) in the component (B) is 30 mass% or more, it is easy to contribute to the improvement of Tg, the tensile stress, and the tensile modulus of elasticity of the cured product, and when the content is 99 mass% or less, the elongation percentage of the cured product can be maintained.

For the purpose of reducing the viscosity of the composition, the component (B) may contain a monofunctional (meth)acrylate or a polyfunctional (meth)acrylate other than the component (B1) and the component (B2), besides the component (B1) and the component (B2).

However, the total content of the component (B1) and the component (B2) in the component (B) is preferably 70 mass% or more, more preferably 80 mass% or more, further preferably 90 mass% or more, even more preferably 95 mass% or more, and 100 mass% or less from a point of view of improving Tg, the elongation percentage, the tensile stress, and the tensile modulus of elasticity of the cured product.

### <Component (C): Compound having a (meth)acryloyloxy group and a glycidyl group>

The component (C) used in the present invention is a compound having a (meth)acryloyloxy group and a glycidyl group.

The component (C) is not particularly limited as long as it is a compound having at least one (meth)acryloyloxy group and at least one glycidyl group, but from a point of view of improving Tg, the elongation percentage, the tensile stress, and the tensile modulus of elasticity of the cured product, is preferably a compound having one to three (meth)acryloyloxy groups and one to three glycidyl groups, more preferably a compound having one or two (meth)acryloyloxy groups and one or two glycidyl groups, and further preferably a compound having one (meth)acryloyloxy group and one glycidyl group.

From a point of view of acting as a cross-linking agent and improving Tg, the tensile stress, and the tensile modulus of elasticity of the cured product, the component (C) is preferably a low-molecular compound and is specifically a compound having a molecular weight of 1000 or less, preferably 800 or less, and more preferably 600 or less. Also from a point of view of having a (meth)acryloyloxy group and a glycidyl group, the molecular weight is preferably 140 or more.

The component (C) even more preferably contains a compound represented by the following general formula (1):

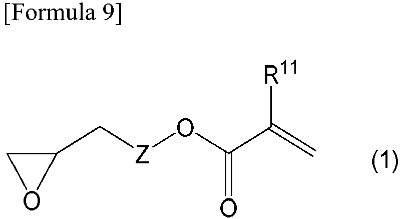

In the formula (1), R¹¹ represents a hydrogen atom or a methyl group. Z is a single bond, -(CH₂)ₘ-O- (m is a number of from 2 to 8), or a divalent group represented by the following general formula (2):

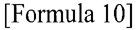

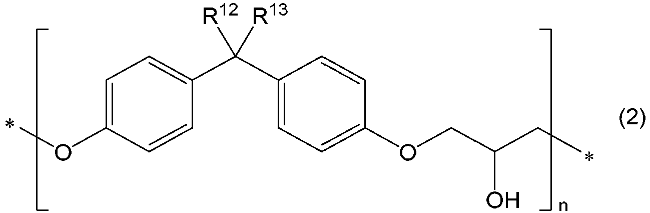

In the formula (2), R¹² and R¹³ each independently represent a hydrogen atom or a methyl group. n is a number of from 1 to 5. * represents a bonding site.

In the formula (1), R¹¹ is preferably a methyl group. Z is preferably a single bond or a divalent group represented by the general formula (2).

In the formula (2), each of R¹² and R¹³ is preferably a methyl group, and n is preferably from 1 to 3, more preferably from 1 to 2, and further preferably 1.

Specific examples of the compound represented by the general formula (1) include at least one selected from the group consisting of glycidyl (meth)acrylate, a compound represented by the following general formula (C-1), and a compound represented by the following general formula (C-2). Among them, from a point of view of improving Tg, the elongation percentage, the tensile stress, and the tensile modulus of elasticity of the cured product, the component (C) preferably contains at least one selected from the group consisting of glycidyl (meth)acrylate and a compound represented by the following general formula (C-2), and more preferably contains at least one selected from the group consisting of glycidyl methacrylate and a compound represented by the following general formula (C-2):

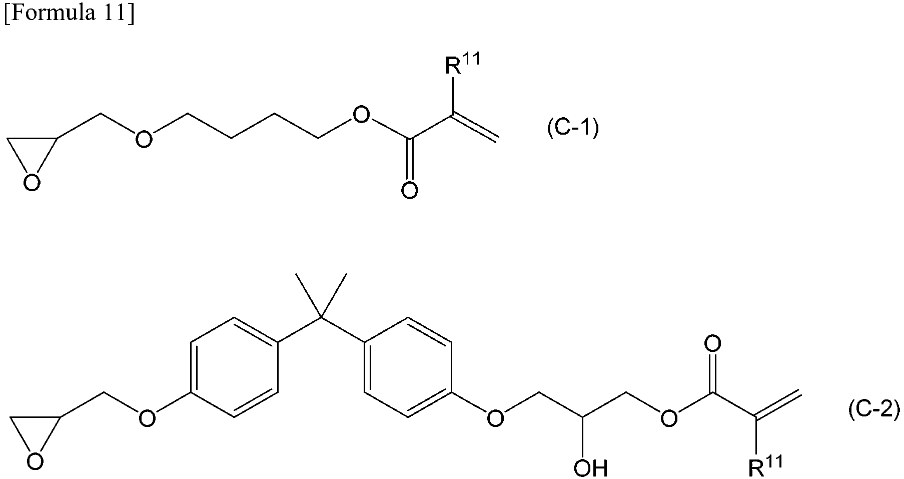

In the formulas, R¹¹ represents a hydrogen atom or a methyl group.

The compound represented by the general formula (C-2) is a compound also called bisphenol A-type half epoxy (meth)acrylate. Examples of a commercially available product thereof include "BAEM-50" (the amount of the active ingredient: 50 mass%) available from KSM Co., Ltd.

### <Component (D): Epoxy resin curing agent containing a boron amine complex>

The component (D) used in the present invention contains a boron amine complex from a point of view of improving the pot life of the composition.

The content of the boron amine complex in the component (D) is preferably 30 mass% or more, more preferably 50 mass% or more, further preferably 70 mass% or more, even more preferably 80 mass% or more, even more preferably 90 mass% or more, and 100 mass% or less from a point of view of improving the pot life of the composition.

Examples of the boron amine complex include a halogenated boron amine complex. Examples of the halogenated boron amine complex include a boron trifluoride amine complex and a boron trichloride amine complex, and from a point of view of improving the pot life of the composition, a boron trichloride amine complex is preferably contained.

Examples of the amine component in the boron amine complex include alkylamines, alkanolamines, and cycloaliphatic amines.

Examples of the alkylamine include: monoalkylamines such as monoethylamine, monopropylamine, monobutylamine, monohexylamine, monooctylamine, and monolaurylamine; dialkylamines such as dimethylamine, diethylamine, dipropylamine, dibutylamine, dihexylamine, dioctylamine, and dilaurylamine; and trialkylamines such as triethylamine, tripropylamine, tributylamine, trihexylamine, trioctylamine, trilaurylamine, N,N-dimethylethylamine, N,N-dimethylpropylamine, N,N-dimethylbutylamine, N,N-dimethylhexylamine, N,N-dimethyloctylamine, and N,N-dimethyllaurylamine.

Examples of the alkanolamine include monoethanolamine, diethanolamine, triethanolamine, monoisopropanolamine, diisopropanolamine, triisopropanolamine, N-methylethanolamine, N-methylisopropanolamine, N-butylethanolamine, N-methyldiethanolamine, N-butyldiethanolamine, and N-methyldiisopropanolamine.

Examples of the cycloaliphatic amine include piperidine, and N,N-dicyclohexylmethylamine.

Among the above, from a point of view of improving the pot life of the composition, the amine component in the boron amine complex is preferably a trialkylamine, more preferably contains at least one selected from the group consisting of N,N-dimethylethylamine, N,N-dimethylpropylamine, N,N-dimethylbutylamine, N,N-dimethylhexylamine, N,N-dimethyloctylamine, and N,N-dimethyllaurylamine, and even more preferably contains N,N-dimethyloctylamine.

Examples of commercially available products of the boron amine complex used as the component (D) include "Accelerator DY 9577" (Boron trichloride amine complex, amine component: N,N-dimethyl-n-octylamine) available from HUNTSMAN Corporation.

The component (D) can also contain an epoxy resin curing agent other than the boron amine complex. Examples of the epoxy resin curing agent other than the boron amine complex include an amine-based curing agent, a phenol-based curing agent, an acid anhydride-based curing agent, and a hydrazide-based curing agent, and one type or two or more types of these can be used.

However, from a point of view of improving the pot life of the composition, the content of the epoxy resin curing agent, other than the boron amine complex, in the component (D) is preferably 70 mass% or less, more preferably 50 mass% or less, further preferably 30 mass% or less, even more preferably 20 mass% or less, even more preferably 10 mass% or less, even more preferably 5 mass% or less, and the lower limit is 0 mass%.

### <Component (E): Thermal radical polymerization initiator>

The component (E) used in the present invention is required to be any compound capable of generating radicals by heating to polymerize (meth)acryloyloxy groups in the component (B) and the component (C), and examples thereof include azo compounds and organic peroxides.

Examples of the azo compound include azobisisobutyronitrile (AIBN), 2,2'-azobis(2,4-dimethylvaleronitrile) (ABVN), 4,4'-azobis(4-cyanopentanoic acid) (ABCVA), 2,2'-azobis(2-methylbutyronitrile) (AMBN), 2,2'-azobis(2-methylpropionamidine) dihydrochloride (AAPH), dimethyl 2,2'-azobis(2-methylpropionic acid), and 2,2'-azobis[2-(2-imidazoline-2-yl)propane] dihydrochloride, and one type or two or more types of these can be used.

Examples of the organic peroxide include: peroxyketals such as 2,2-bis(4,4-di-tert-butylperoxycyclohexyl)propane, 1,1-di(tert-hexylperoxy)cyclohexane, 1,1-di(tert-butylperoxy)cyclohexane, n-butyl-4,4-di(tert-butylperoxy) valerate, and 2,2-di(tert-butylperoxy)butane; hydroperoxides such as tert-butyl hydroperoxide, cumene hydroperoxide, diisopropylbenzene hydroperoxide, p-menthane hydroperoxide, and 1,1,3,3,-tetramethylbutyl hydroperoxide; dialkyl peroxides such as tert-butyl cumyl peroxide, di-tert-butyl peroxide, di-tert-hexyl peroxide, dicumyl peroxide, α,α'-di(tert-butylperoxy)diisopropylbenzene, tert-butyl cumyl peroxide, 2,5-dimethyl-2,5-di(tert-butylperoxy)hexane, and 2,5-dimethyl -2,5-bis(tert-butylperoxy)hexyne-3; diacyl peroxides such as diisobutyl peroxide, di(3,5,5-trimethylhexanol) peroxide, dilauroyl peroxide, disuccinic acid peroxide, and benzoyl peroxide; peroxydicarbonates such as diisopropyl peroxydicarbonate, di-n-propylperoxydicarbonate, bis(4-tert-butylcyclohexyl) peroxydicarbonate, di-2-ethylhexylperoxydicarbonate, and di-sec-butylperoxydicarbonate; and peroxyesters such as cumyl peroxy neodecanoate, 1,1,3,3,-tetramethylbutyl peroxy neodecanoate, tert-hexyl peroxy neodecanoate, tert-butyl peroxy neodecanoate, tert-hexyl peroxy pivalate, tert-butyl peroxy pivalate, 2,5-dimethyl-2,5-di(2-ethylhexanoylperoxy)hexane, 1,1,3,3,-tetramethylbutylperoxy-2-ethylhexanoate, tert-hexylperoxy-2-ethylhexanoate, tert-butylperoxy-2-ethylhexanoate, tert-butyl peroxylaurate, tert-butyl peroxy-3,5,5-trimethylhexanoate, tert-hexyl peroxyisopropyl monocarbonate, tert-butyl peroxyisopropyl monocarbonate, tert-butylperoxy-2-ethylhexyl monocarbonate, 2,5-dimethyl-2,5-di(benzoylperoxy)hexane, tert-butyl peroxyacetate, tert-hexyl peroxybenzoate, and tert-butyl peroxybenzoate, and one type or two or more types thereof can be used.

Among the above, from a point of view of improving the pot life of the composition, the component (E) is preferably a thermal radical polymerization initiator having a 10-hour half-life temperature of 100°C or higher, and more preferably an organic peroxide having a 10-hour half-life temperature of 100°C or higher.

Examples of the organic peroxide having a 10-hour half-life temperature of 100°C or higher include at least one selected from the group consisting of peroxyketal, hydroperoxide, dialkyl peroxide, and peroxyester.

From a point of view of the curability of the component (B) and the component (C) and from a point of view of improving the pot life of the composition, the component (E) preferably contains dialkyl peroxide, and more preferably contains 2,5-dimethyl-2,5-di(tert-butylperoxy)hexane.

### <Content>

The content of the component (A) in the thermosetting resin composition is preferably from 30 to 85 mass%, more preferably from 40 to 85 mass%, further preferably from 50 to 80 mass%, and even more preferably from 60 to 80 mass%, from a point of view of improving the pot life of the composition and from a point of view of improving Tg, the elongation percentage, the tensile stress, and the tensile modulus of elasticity of the cured product.

The content of the component (B) in the thermosetting resin composition is preferably from 5 to 60 mass%, more preferably from 10 to 50 mass%, further preferably from 15 to 40 mass%, and even more preferably from 15 to 30 mass% from a point of view of improving the pot life of the composition and from a point of view of improving Tg, the elongation percentage, the tensile stress, and the tensile modulus of elasticity of the cured product.

The content of the component (B) in the thermosetting resin composition is preferably from 5 to 70 parts by mass, more preferably from 10 to 60 parts by mass, further preferably from 10 to 50 parts by mass, even more preferably from 15 to 50 parts by mass, even more preferably from 20 to 50 parts by mass, and even more preferably from 30 to 50 parts by mass, per 100 parts by mass of the component (A). When the content of the component (B) in the thermosetting resin composition is 5 parts by mass or more per 100 parts by mass of the component (A), a long pot life is easily achieved. When the content is 70 parts by mass or less, Tg, the tensile stress, and the tensile modulus of elasticity of the cured product are easily maintained.

The content of the component (C) in the thermosetting resin composition is preferably from 0.1 to 20 mass%, more preferably from 0.3 to 10 mass%, further preferably from 0.5 to 7.0 mass%, and even more preferably from 0.8 to 5.0 mass% from a point of view of improving the pot life of the composition and from a point of view of improving Tg, the elongation percentage, the tensile stress, and the tensile modulus of elasticity of the cured product.

The content of the component (C) in the thermosetting resin composition is preferably from 0.1 to 30 parts by mass, more preferably from 0.5 to 20 parts by mass, further preferably from 0.5 to 10 parts by mass, and even more preferably from 0.8 to 6.0 parts by mass, per 100 parts by mass in total of the component (A) and the component (B). When the content of the component (C) in the thermosetting resin composition is 0.1 parts by mass or more per 100 parts by mass in total of the component (A) and the component (B), it is easy to contribute to the improvement of Tg, the tensile stress, and the tensile modulus of elasticity of the cured product, and when the content is 30 parts by mass or less, the elongation percentage of the cured product can be maintained.

The content of the component (D) in the thermosetting resin composition is preferably from 0.1 to 40 parts by mass, more preferably from 0.5 to 20 parts by mass, further preferably from 1 to 10 parts by mass, even more preferably from 2 to 10 parts by mass, and even more preferably from 3 to 8 parts by mass, per 100 parts by mass of the component (A). When the content of the component (D) in the thermosetting resin composition is 0.1 parts by mass or more per 100 parts by mass of the component (A), curability is easily ensured, and when the content is 40 parts by mass or less, a long pot life is easily achieved.

The content of the component (E) in the thermosetting resin composition is preferably from 0.01 to 5 parts by mass, more preferably from 0.05 to 4 parts by mass, further preferably from 0.1 to 3 parts by mass, and still more preferably from 0.5 to 2 parts by mass, per 100 parts by mass of the component (B). When the content of the component (E) in the thermosetting resin composition is 0.01 parts by mass or more per 100 parts by mass of the component (B), curability is easily ensured, and when the content is 5 parts by mass or less, a long pot life is easily achieved.

The total content of the components (A) to (E) in the thermosetting resin composition is preferably 70 mass% or more, more preferably 80 mass% or more, further preferably 90 mass% or more, even more preferably 95 mass% or more, and 100 mass% or less in the solid content of the thermosetting resin composition from a point of view of effectively exhibiting the effect of the present invention. Note that "solid content of the thermosetting resin composition" is an amount excluding water and organic solvents from total amount of the thermosetting resin composition.

### <Other components>

The thermosetting resin composition may further contain other components such as a filler, a modifying component such as a plasticizer, a flow adjusting component such as a thixotropic agent, a reactive or non-reactive diluent, a pigment, a leveling agent, a tackifier, and a stress relaxation component according to the intended use.

Among the above, examples of the stress relaxation component include elastomer particles such as silicone elastomer particles, butyl acrylate elastomer particles, polyether amine elastomer particles, and other rubber particles. In addition, a liquid rubber component such as epoxidized polybutadiene can also be used. Examples of commercially available products of the stress relaxation component include "Kane Ace" B series, FM series, M series, and MX series available from KANEKA CORPORATION, and "EPOLEAD PB3600" and "EPOLEAD PB4700" which are liquid epoxidized polybutadienes available from Daicel Corporation.

When the thermosetting resin composition contains a stress relaxation component, the content thereof is preferably from 0.1 to 15 mass%, more preferably from 0.5 to 10 mass% in the solid content of the thermosetting resin composition.

### <Solvent>

The thermosetting resin composition of the present invention may further contain a solvent from a point of view of enhancing impregnating ability into reinforcing fibers.

Examples of the solvent include alcohol-based solvents such as methanol, ethanol, 1-propanol, 2-propanol, 1-butanol, 2-butanol, 2-methoxyethanol, 2-ethoxyethanol, 2-propoxyethanol, 2-butoxyethanol, 1-methoxy-2-propanol, 1-ethoxy-2-propanol, and 1-propoxy-2-propanol; ester-based solvents such as ethyl acetate and butyl acetate; ketone-based solvent such as acetone, methylethylketone, and methylisobutylketone; ether-based solvents such as diethyl ether and diisopropyl ether; and hydrocarbon-based solvents such as toluene, and one type or two or more types of these solvents can be used.

From a point of view of the solubility of blending components and from a point of view of the easiness of removing the solvent, the solvent is preferably at least one selected from the group consisting of alcohol-based solvents, ester-based solvents, ketone-based solvents, and hydrocarbon-based solvents, each of which having 8 or less carbons, and more preferably at least one selected from the group consisting of methanol, ethanol, 1-propanol, 2-propanol, 1-butanol, 2-butanol, ethyl acetate, methylethylketone, methylisobutylketone, and toluene.

When the thermosetting resin composition contains a solvent, the content thereof is not particularly limited, but is preferably 5 mass% or more, more preferably 10 mass% or more, further preferably 15 mass% or more in the thermosetting resin composition from a point of view of enhancing the impregnating ability into the reinforcing fiber, and is preferably 80 mass% or less, more preferably 70 mass% or less from a point of view of the easiness of removing the solvent.

The thermosetting resin composition may be a solvent-free type composition that contains substantially no solvents. The solvent-free type thermosetting resin composition refers to a thermosetting resin composition, in which the content of the solvent in the thermosetting resin composition is preferably less than 5 mass%, more preferably 2 mass% or less, further preferably 1 mass% or less, even more preferably 0.5 mass% or less, and even more preferably 0 mass%.

Alternatively, the thermosetting resin composition of the present invention is preferably a nonaqueous thermosetting resin composition, and a small content of water is preferable. The content of water in the thermosetting resin composition is preferably less than 10 mass%, more preferably less than 5 mass%, further preferably less than 2 mass%, even more preferably less than 1 mass%, even more preferably less than 0.1 mass%, and even more preferably 0 mass%. The content of water used herein is an amount of water intentionally added to the thermosetting resin composition and does not exclude water present in a small amount as impurities.

### <Pot life>

The thermosetting resin composition of the present invention has a long pot life and can achieve, for example, a pot life of 180 days or longer in storage at room temperature (23°C).

The method of preparing the thermosetting resin composition is not particularly limited, and the thermosetting resin composition can be prepared by mixing the components (A) to (E) and other components used as necessary using a known method and apparatus. The order of mixing the components contained in the thermosetting resin composition is also not particularly limited, but when any of the components (A) to (C) which are resin components have high viscosity, the components (A) to (C) are preferably heated to a temperature within a range of from 80 to 120°C and mixed in advance, and then cooled to lower than 80°C, followed by mixing of the component (D) and the component (E). This is to prevent thermal curing from proceeding during the preparation of the thermosetting resin composition.

### [Cured product]

The cured product of the thermosetting resin composition of the present invention (hereinafter, also simply referred to as "cured product of the present invention") is a thermally cured product of the thermosetting resin composition of the present invention described above by a known method. The curing conditions of the thermosetting resin composition are appropriately selected depending on the intended use and form, but the curing temperature is preferably from 80 to 180°C, and more preferably from 100 to 160°C, and the curing time is preferably from 1 minute to 12 hours, and more preferably from 5 minutes to 6 hours.

The form of the cured product of the present invention is also not particularly limited, and can be selected according to the intended use. For example, when the intended use of the thermosetting resin composition is a coating material, the cured product of the composition is usually in the form of a film. Note that, from a point of view of effectively exhibiting the effect of the present invention, the cured product of the present invention is preferably a matrix resin of a fiber-reinforced composite material described later.

The glass transition temperature (Tg) of the cured product of the present invention is preferably 100°C or higher, more preferably 110°C or higher, further preferably 115°C or higher, and even more preferably 120°C or higher, and usually 200°C or lower from a point of view of using in the cured product for a matrix resin of a fiber-reinforced composite material described later, and the like. Tg of the cured product can be specifically measured by the method described in Examples.

The tensile elongation percentage of the cured product of the present invention is preferably 4.0% or more, more preferably 4.5% or more, and further preferably 5.0% or more from a point of view of improving impact resistance, for example, for use in a matrix resin or the like for a fiber-reinforced composite material described later, and is preferably 20% or less, and more preferably 10% or less from a point of view of obtaining high hardness.

The tensile stress of the cured product of the present invention is preferably 40 MPa or more, more preferably 43 MPa or more, and further preferably 45 MPa or more from a point of view of improving hardness, for example, for use in a matrix resin or the like for a fiber-reinforced composite material described later.

The tensile modulus of elasticity of the cured product of the present invention is preferably 1.2 GPa or more, more preferably 1.3 GPa or more, and further preferably 1.5 GPa or more from a point of view of improving hardness, for example, for use in a matrix resin or the like for a fiber-reinforced composite material described later.

The tensile elongation percentage, the tensile stress, and the tensile modulus of elasticity of the cured product can be specifically measured by the methods described in Examples in accordance with JIS K7161-1: 2014 and JIS K7161-2: 2014.

### [Prepreg]

The prepreg of the present invention contains the thermosetting resin composition and reinforcing fibers.

Examples of the form of the reinforcing fibers used in the prepreg include short fibers, long fibers, and continuous fibers. Among them, from a point of view of producing a large structure using the resultant prepreg, long fibers or continuous fibers are preferable, and continuous fibers are more preferable.

Note that, as used herein, the short fibers refer to fibers having a fiber length of 0.1 mm or more and less than 10 mm, and the long fibers refer to fibers having a fiber length of 10 mm or more and 100 mm or less. The continuous fiber refers to a fiber bundle having a fiber length of more than 100 mm.

Examples of the shape of the continuous fibers include a tow, a sheet, and a tape, and examples of the continuous fibers that make up the sheet or the tape include a unidirectional (UD) material, a woven fabric, and a nonwoven fabric.

From a point of view of producing a fiber-reinforced composite material by a filament winding process or a tape winding process using a prepreg, the shape of the continuous fibers is preferably a tow or a tape, and more preferably a tow. The number of continuous fiber bundles (the number of filaments) included in the tow is preferably from 3 K to 50 K, and more preferably from 6 K to 40 K from a point of view of easiness to obtain a high strength and a high elastic modulus.

In the continuous fibers, the average fiber length of the continuous fiber bundle is not particularly limited, but is preferably from 1 to 10000 m, and more preferably from 100 to 10000 m from a point of view of molding processability.

The average fineness of the continuous fiber bundle is preferably from 50 to 2000 tex (g/1000 m), more preferably from 200 to 1500 tex, and further preferably from 500 to 1500 tex from a point of view of molding processability and from a point of view of easiness to obtain a high strength and a high elastic modulus.

The average tensile modulus of elasticity of the continuous fiber bundle is preferably from 50 to 1000 GPa.

Examples of a material for the reinforcing fibers include inorganic fibers such as carbon fibers, glass fibers, basalt fibers, metal fibers, boron fibers, and ceramic fibers; and organic fibers such as aramid fibers, polyoxymethylene fibers, aromatic polyamide fibers, polyparaphenylenebenzobisoxazole fibers, and ultra-high-molecular-weight polyethylene fibers. Among them, inorganic fibers are preferable from a point of view of obtaining a high strength, and the reinforcing fiber is preferably at least one selected from the group consisting of carbon fibers, glass fibers, and basalt fibers from a point of view of lightweight and high strength, and high elastic modulus, and more preferably carbon fibers from a point of view of strength and lightweight.

Examples of the carbon fibers include polyacrylonitrile-based carbon fibers and pitchbased carbon fibers. In addition, carbon fibers made from plant-based raw materials such as lignin and cellulose can also be used.

The reinforcing fibers may be treated with a treatment agent. Examples of the treatment agent include a surface treatment agent or a sizing agent.

The surface treatment agent is preferably a silane coupling agent. Examples of the silane coupling agent include silane coupling agents each having a vinyl group, silane coupling agents each having an amino group, silane coupling agents each having an epoxy group, silane coupling agents each having a (meth)acrylic group, and silane coupling agents each having a mercapto group.

Examples of the sizing agent include urethane-based sizing agents, epoxy-based sizing agents, acrylic-based sizing agents, polyester-based sizing agents, vinyl ester-based sizing agents, polyolefin-based sizing agents, polyether-based sizing agents, and carboxylic acid-based sizing agents, and one type thereof can be used, or two or more types thereof can be used in combination. Examples of combinations of two or more types of the sizing agents include urethane/epoxy-based sizing agents, urethane/acrylic-based sizing agents, and urethane/carboxylic acid-based sizing agents.

The amount of the treatment agent is preferably from 0.001 to 5 mass%, more preferably from 0.1 to 3 mass%, and further preferably from 0.5 to 2 mass% with respect to the reinforcing fibers from a point of view of improving interfacial adhesion between the fibers and the cured product of the thermosetting resin composition and further improving the strength and impact resistance of the resulting prepreg and fiber-reinforced composite material.

A commercially available product can also be used as the reinforcing fibers. Examples of commercially available continuous carbon fibers (tows) include TORAYCA YARN such as each series of "T300", "T300B", "T400HB", "T700SC", "T800SC", "T800HB", "T830HB", "T1000GB", "T100GC", "M35JB", "M40JB", "M46JB", "M50JB", "M55J", "M55JB", "M60JB", "M30SC", and "Z600", which are available from Toray Industries, Inc.; Tenax such as "HTA40" series, "HTS40" series, "HTS45" series, "HTS45P12" series, "STS40" series, "UTS50" series, "ITS50" series, "ITS55" series, "IMS40" series, "IMS60" series, "IMS65" series, "IMS65P12" series, "HMA35" series, "UMS40" series, "UMS45" series, "UMS55" series, and "HTS40MC" series, which are available from TEIJIN LIMITED; and carbon fiber tows such as PYROFIL "HT", "IM", "HM" series, GRAFIL "HT" series and "DIALEAD" series, which are available from Mitsubishi Chemical Corporation.

Furthermore, examples of commercially available continuous carbon fibers other than tows include carbon fiber fabrics such as TORAYCA CLOTH "CO6142", "CO6151B", "CO6343", "CO6343B", "CO6347B", "CO6644B", "CK6244C", "CK6273C", "CK6261C", "UT70" series, "UM46" series, "BT70" series, "T300" series, "T300B" series, "T400HB" series, "T700SC" series, "T800SC" series, "T800HB" series, "T1000GB" series, "M35JB" series, "M40JB" series, "M46JB" series, "M50JB" series, "M55J" series, "M55JB" series, "M60JB" series, "M30SC" series, "Z600GT" series, which are available from Toray Industries, Inc.; and carbon fiber fabrics such as PYROFIL "TR3110M", "TR3523M", "TR3524M", "TR6110HM", "TR6120HM", "TRK101M", "TRK510M", "TR3160TMS", "TRK979PQRW", "TRK976PQRW", "TR6185HM" and "TRK180M", which are available from Mitsubishi Chemical Corporation.

From a point of view of achieving high strength and high elastic modulus, the content of reinforcing fibers in the prepreg is within a range such that the volume fraction of reinforcing fibers in the prepreg is preferably 0.10 or more, more preferably 0.20 or more, further preferably 0.30 or more, and even more preferably 0.40 or more. From a point of view of improving impact resistance and molding processability, the content of reinforcing fibers in the prepreg is within a range such that the volume fraction of reinforcing fibers in the prepreg is preferably 0.85 or less, more preferably 0.80 or less, and further preferably 0.70 or less.

The volume fraction Vf₁ of reinforcing fibers in the prepreg can be calculated from the following equation. 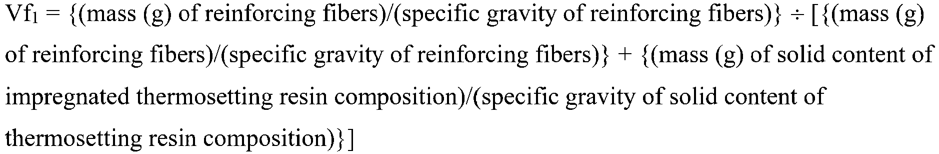 Vf1 = {(mass (g) of reinforcing fibers)/(specific gravity of reinforcing fibers)} ÷ [{(mass (g) of reinforcing fibers)/(specific gravity of reinforcing fibers)} + {(mass (g) of solid content of impregnated thermosetting resin composition)/(specific gravity of solid content of thermosetting resin composition)}]

From a point of view of achieving the effect of the present invention, the total content of the solid content of the thermosetting resin composition and the reinforcing fibers included in the prepreg is preferably 70 mass% or more, more preferably 80 mass% or more, further preferably 90 mass% or more, and is 100 mass% or less.

### <Shape and manufacturing method of prepreg>

The shape of the prepreg varies depending on the form of the reinforcing fiber to be used, but the prepreg of the present invention is preferably a tow prepreg or a tape prepreg from a point of view of producing a fiber-reinforced composite material by a filament winding process or a tape winding process. Examples of the tape prepreg include UD tape prepregs obtained using a unidirectional (UD) material.

Alternatively, the prepreg of the present invention may be a sheet-shaped prepreg obtained using continuous fibers in the form of a UD material, a woven fabric, a nonwoven fabric, or the like.

The manufacturing method of the prepreg is not particularly limited, and the prepreg can be manufactured according to a common method. For example, the reinforcing fibers are impregnated with the thermosetting resin composition, and then subjected to a drying step as necessary to remove the solvent, and the prepreg can be obtained.

The method of impregnating the reinforcing fibers with the thermosetting resin composition is not particularly limited, and a known method can be appropriately used depending on the form of the reinforcing fibers, and the like. For example, in the case of manufacturing a tow prepreg, mention may be made of a method in which a continuous fiber bundle unwound from a roll is impregnated into a resin bath filled with the thermosetting resin composition described above, thereby impregnating the continuous fiber bundle with the composition, and then the continuous fiber bundle is pulled up from the resin bath. Thereafter, a step of removing excess thermosetting resin composition by using a drawing roll or the like may be performed.

The impregnation with the thermosetting resin composition can also be performed under a pressurized condition or a depressurized condition as necessary.

Subsequently, if necessary, the reinforcing fibers impregnated with the thermosetting resin composition are subjected to a drying step to remove the solvent. The drying conditions in the drying step are not particularly limited, but are preferably conditions under which the solvent can be removed and the curing of the thermosetting resin composition does not excessively proceed. From this viewpoint, for example, the drying temperature can be selected in the range of from 30 to 120°C, and the drying time can be selected in the range of from 10 seconds to 5 minutes.

The prepreg obtained through the drying step may be wound once to form a prepreg product, or may be continuously subjected to the manufacturing of a fiber-reinforced composite material after being subjected to the drying step without winding or the like.

The prepreg of the present invention has a long pot life and can achieve, for example, a pot life of 180 days or longer in storage at room temperature (23°C).

### [Fiber-reinforced composite material]

The fiber-reinforced composite material (hereinafter, also simply referred to as "composite material") of the present invention is a cured product of the prepreg, and includes a cured product of the thermosetting resin composition and reinforcing fibers. The fiber-reinforced composite material of the present invention contains a cured product of the thermosetting resin composition and thus has high heat resistance and high impact resistance ascribable to a high glass transition temperature and elongation percentage of the cured product.

The prepreg, the thermosetting resin composition, the reinforcing fibers used in the manufacturing of the composite material, and preferred aspects thereof are the same as those described above.

### <Content>

From a point of view of obtaining high strength and high elastic modulus, the content of the reinforcing fibers in the fiber-reinforced composite material is within a range such that the volume fraction of the reinforcing fibers in the fiber-reinforced composite material is preferably 0.10 or more, more preferably 0.20 or more, further preferably 0.30 or more, and even more preferably 0.40 or more. From a point of view of improving impact resistance and molding processability, the content of reinforcing fibers in the fiber-reinforced composite material is within a range such that the volume fraction of reinforcing fibers in the fiber-reinforced composite material is preferably 0.85 or less, more preferably 0.80 or less, and further preferably 0.70 or less.

The volume fraction Vf of the reinforcing fibers in the fiber-reinforced composite material can be calculated from the following equation. 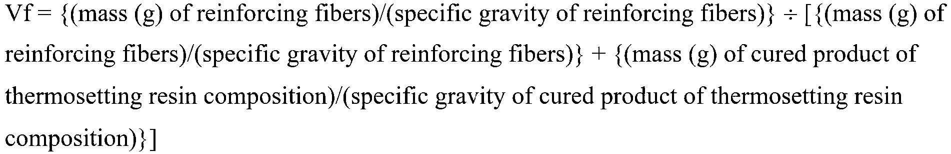 Vf = {(mass (g) of reinforcing fibers)/(specific gravity of reinforcing fibers)} ÷ [{(mass (g) of reinforcing fibers)/(specific gravity of reinforcing fibers)} + {(mass (g) of cured product of thermosetting resin composition)/(specific gravity of cured product of thermosetting resin composition)}]

### <Manufacturing method of a fiber-reinforced composite material>

The manufacturing of the composite material can be carried out by using the prepreg to perform pre-molding to obtain a desired shape, and then curing the prepreg. For example, when the composite material of the present invention is applied to a molded body having a hollow shape such as a pipe, a shaft, a cylinder, or a tank, a prepreg having a tow or tape shape can be used and molded by the filament winding process, the tape winding process, the braiding process, the 3D printing process, or the like to manufacture the composite material.

In the filament winding process or the tape winding process, specifically, a prepreg in a tow or tape shape is wound around an outer surface of a balloon, a mandrel, or a liner, and then cured by heating, and thereby a composite material having a desired shape can be manufactured.

In the braiding process, for example, a step is performed in which a balloon or a mandrel is used to form a prepreg by braiding a tow or tape-shaped prepreg with a braider in one direction or to create a braid structure, and then curing the prepreg by heating. Note that, in the braiding process, a tow or tape-shaped prepreg may be made into a string and molded without using a balloon or a mandrel.

In case of using a sheet-shaped prepreg in which a unidirectional (UD) material, a woven fabric, a nonwoven fabric, or the like is used as the continuous fibers, one or more prepregs can be stacked and placed in a mold, and allowed to cure by heating under a vacuum condition or a pressurized condition to manufacture a composite material.

The curing method for the prepreg in the manufacturing of the composite material is also not particularly limited, and is performed by a known method at a temperature and time sufficient for curing the thermosetting resin composition contained in the prepreg. The curing conditions of the prepreg depend on the thickness of the prepreg and also the composite material to be formed, and for example, the curing temperature can be selected in the range of preferably from 80 to 180°C, and more preferably from 100 to 160°C, and the curing time can be selected in the range of preferably from 1 minute to 12 hours, and more preferably from 5 minutes to 6 hours.

The composite material of the present invention is suitably used for a molded body having a hollow shape such as a pipe, a shaft, a cylinder, or a tank from a point of view of manufacturing using a tow or tape-shaped prepreg. The composite material is suitable as a material for forming a high-pressure gas container, for example.

### [High-pressure gas container]

The high-pressure gas container of the present invention includes the fiber-reinforced composite material. The high-pressure gas container of the present invention may be configured such that at least a part thereof is made of the fiber-reinforced composite material. For example, in a case of a high-pressure gas container having a liner and an outer layer provided so as to cover the outer surface of the liner, examples thereof include a high-pressure gas container in which at least one of the liner and the outer layer is made of the fiber-reinforced composite material. In a case of a linerless high-pressure gas container, examples thereof include the entire container is made of the fiber-reinforced composite material.

Examples of specific aspects of the high-pressure gas container containing the fiber-reinforced composite material include (1) a configuration having a metallic liner and an outer layer made of the fiber-reinforced composite material of the present invention, (2) a configuration having a resin liner and an outer layer made of the fiber-reinforced composite material of the present invention, (3) a configuration having a liner made of the fiber-reinforced composite material of the present invention and an outer layer made of a material other than the fiber-reinforced composite material, and (4) a (linerless) configuration only including a container made of the fiber-reinforced composite material of the present invention.

Examples of the metal used in the "metallic liner" in the aspect (1) include light alloys such as aluminum alloys and magnesium alloys.

The resin used for the "resin liner" in the aspect (2) is not particularly limited as long as it is a resin excellent in gas barrier properties and pressure resistance, and examples thereof include thermoplastic resins, cured products of thermosetting resins, and cured products of photocurable resins. Among them, a thermoplastic resin is preferred from the point of view that the liner can be easily molded.

Examples of the thermoplastic resin include polyamide resins, polyester resins, polyolefin resins, polyimide resins, polycarbonate resins, polyetherimide resins, polyamideimide resins, polyphenylene etherimide resin, polyphenylene sulfide resins, polysulfone resins, polyethersulfone resins, polyarylate resins, liquid crystal polymers, polyetheretherketone resins, polyetherketone resins, polyetherketoneketone resins, polyetheretherketoneketone resins, and polybenzimidazole resins, and one type thereof can be used, or two or more types thereof can be used in combination.

From a point of view of gas barrier properties and pressure resistance, the thermoplastic resin is preferably at least one selected from the group consisting of a polyamide resin and a polyolefin resin, and more preferably a polyamide resin.

Besides, from a point of view of enhancing impact resistance, the resin liner may contain the above-described stress relaxation component.

As the "outer layer made of a material other than the fiber-reinforced composite material" in the aspect (3), preferable examples thereof include an outer layer made of a fiber-reinforced composite material other than the fiber-reinforced composite material of the present invention from a point of view of improving reinforcing properties.

In the aspects (1) to (3), the outer layer can be formed so as to cover the outer surface of the main body portion of the liner without any gaps.

The outer layer may be provided directly on the outer surface of the liner. Alternatively, one additional layer or two or more additional layers may be provided on the outer surface of the liner, and the outer layer may be provided on the surface of the additional layer. For example, an adhesive layer may be provided between the liner and the outer layer in order to improve adhesion between the liner and the outer layer.

In a case where the high-pressure gas container is of the aspect of (1) or (2), the thickness of the outer layer made of the fiber-reinforced composite material of the present invention can be appropriately selected according to the capacity, shape, and the like of the high-pressure gas container, but the thickness of the outer layer is preferably 100 µm or more, more preferably 200 µm or more, further preferably 400 µm or more from a point of view of imparting high gas barrier properties and impact resistance, and is preferably 80 mm or less, more preferably 60 mm or less from a point of view of reducing the size and weight of the high-pressure gas container.

In a case where the high-pressure gas container is of the aspect (3), the thickness of the liner made of the fiber-reinforced composite material of the present invention can be appropriately selected according to the capacity, shape, and the like of the high-pressure gas container, but the thickness of the liner is preferably 100 µm or more, more preferably 200 µm or more, and further preferably 400 µm or more from a point of view of gas barrier properties and pressure resistance, and is preferably 60 mm or less, and more preferably 40 mm or less from a point of view of reducing the size and weight of the high-pressure gas container.

In a case where the high-pressure gas container is of the aspect (4), the thickness of the container made of the fiber-reinforced composite material of the present invention can be appropriately selected according to the capacity, shape, and the like of the high-pressure gas container, but the thickness of the container is preferably 1 mm or more, more preferably 2 mm or more, and further preferably 5 mm or more from a point of view of gas barrier properties and pressure resistance, and is preferably 80 mm or less, and more preferably 60 mm or less from a point of view of reducing the size and weight of the high-pressure gas container.

From a point of view of achieving high strength and high elastic modulus, the content of the reinforcing fibers in the liner, in the outer layer, or in the high-pressure gas container made of the fiber-reinforced composite material of the present invention is within a range such that the volume fraction of the reinforcing fibers is preferably 0.10 or more, more preferably 0.20 or more, further preferably 0.30 or more, and even more preferably 0.40 or more. From a point of view of gas barrier properties, impact resistance, and molding processability, the content is within a range such that the volume fraction of the reinforcing fibers is preferably 0.85 or less, more preferably 0.80 or less, further preferably 0.75 or less, and even more preferably 0.70 or less.

The volume fraction of the reinforcing fibers can be calculated by the same method as described above.

Among those described above, the high-pressure gas container is preferably of any of the aspects (2), (3), or (4), and more preferably of the aspect (3) or (4) from a point of view of lightweight and the point of view that high gas barrier properties are required for the fiber-reinforced composite material.

Note that, the high-pressure gas container may further include parts made of a material other than the fiber-reinforced composite material, such as a connector and a valve. Furthermore, any optional layer such as a protective layer, a coating layer, and a rust preventive-containing layer may be formed on the surface of the high-pressure gas container.

The gas to be stored in the high-pressure gas container needs to be in gaseous state at 25°C and 1 atm, and examples thereof include oxygen, carbon dioxide, nitrogen, argon, LPG, a substitute for CFCs, and methane, besides hydrogen. Among them, hydrogen is preferable from a point of view of the effectiveness of the present invention.

### <Manufacturing method of high-pressure gas container>

As a manufacturing method of the high-pressure gas container of the present invention, the manufacturing methods described in Manufacturing method of fiber-reinforced composite material described above can be appropriately used according to the form of the reinforcing fibers or the prepreg to be used. In a case where a tow or tape-shaped prepreg is used to manufacture a high-pressure gas container, the tow or tape-shaped prepreg is molded by the filament winding process, the tape winding process, the braiding process, the 3D printing process, or the like and thereby making it possible to manufacture the high-pressure gas container.

In a case where the high-pressure gas container is of the aspect (1) or (2), by using the filament winding process or the tape winding process, a tow or tape-shaped prepreg is wound so as to cover an outer surface of a metallic or resin liner, and then cured by heating to form an outer layer made of the fiber-reinforced composite material, whereby the high-pressure gas container can be manufactured.

In a case where the high-pressure gas container is of the aspect (3) or (4), a tow or tape-shaped prepreg is formed into a container shape by the filament winding process, the tape winding process, the braiding process, the 3D printing process, or the like, and then cured by heating, whereby the high-pressure gas container can be manufactured.

### Examples

Hereinafter, the present invention will be described in detail with reference to Examples and Comparative Examples, but the present invention is not limited to the following Examples. Note that the measurements and evaluations in the present Examples were performed by the methods set forth below.

### <Glass transition temperature (Tg)>

The thermosetting resin composition prepared in each example was formed into a flat plate of 200 mm × 200 mm × 2 mm thickness, and thermally cured in a hot air oven at 130°C for 180 minutes to prepare a cured product. A strip piece having a size of 50 mm × 10 mm × 2 mm thickness was cut out from the cured product to give a dynamic viscoelasticity (DMA) measurement sample.

Using the sample, DMA bending measurement was performed under the following conditions using a rotational rheometer "ARES G2" (available from TA Instruments). When tanδ was plotted on the ordinate against a measurement temperature on the abscissa, the peak top value of tanδ was regarded as Tg of the cured product.

### (Measurement conditions)

Measurement mode: Bending DMA measurement
Measurement temperature: 30 to 180°C
Temperature rising rate: 5°C/min

### <Tensile elongation percentage, tensile stress, and tensile modulus of elasticity>

The thermosetting resin composition prepared in each example was formed into a flat plate of 200 mm × 200 mm × 2 mm thickness, and thermally cured in a hot air oven at 130°C for 180 minutes to prepare a cured product. A strip piece having a size of 180 mm × 15 mm × 2 mm thickness was cut out from the cured product to give a tensile test piece.

Using the test piece, a tensile test was performed (N = 3) under the following conditions using a precision universal tester ("Autograph AGX-plus" available from Shimadzu Corporation) in accordance with JIS K7161-1:2014 and JIS K7161-2:2014, and the elongation percentage, the tensile stress, and the tensile modulus of elasticity were calculated by the following equations. The length of the test piece at break was calculated from the amount of displacement of the load cell at break.

### (Measurement conditions)

Distance between grips: 115 mm
Gauge length: 75 mm
Load cell (tensile force): 1 kN
Tensile speed: 1 mm/min (tensile direction: longitudinal direction of test piece) (Equation) 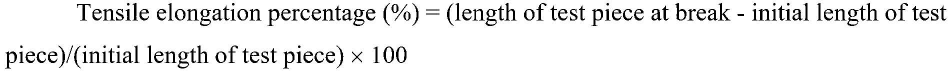 Tensile elongation percentage (%) = (length of test piece at break - initial length of test piece)/(initial length of test piece) × 100 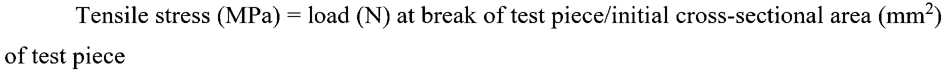 Tensile stress (MPa) = load (N) at break of test piece/initial cross-sectional area (mm2) of test piece 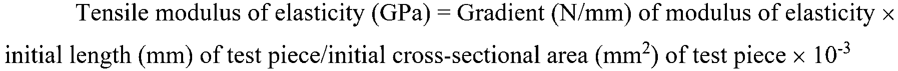 Tensile modulus of elasticity (GPa) = Gradient (N/mm) of modulus of elasticity × initial length (mm) of test piece/initial cross-sectional area (mm2) of test piece × 10-3

The gradient of the modulus of elasticity used herein means a slope of a stress-strain curve in which tensile strain (a value obtained by dividing the increment of a gauge length by the gauge length) corresponds to between two points, 0.05% and 0.25%.

### <Pot life>

The initial viscosity of the thermosetting resin composition at 23°C, prepared in each example, was measured, and then 10 g of the thermosetting resin composition was placed in a plastic cup (46 mm in diameter) and stored at 23°C. The time for the viscosity of the thermosetting resin composition to be twice or more as high as the initial viscosity was measured and shown in the table.

The viscosity of the thermosetting resin composition was measured with an E-type viscometer "TVE-22H type viscometer (cone plate type)" (available from Toki Sangyo Co., Ltd).

### Examples 1 to 14 and Comparative Examples 1 to 5 (Preparation and evaluation of thermosetting resin composition)

The components shown in Table 1 were blended and mixed in parts by mass shown in Table 1 to give a thermosetting resin composition. The resultant thermosetting resin composition was evaluated by the above-described methods. The results are shown in Table 1.

Note that the blending amounts (parts by mass) in Table 1 each are the amount of the active ingredient.

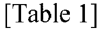

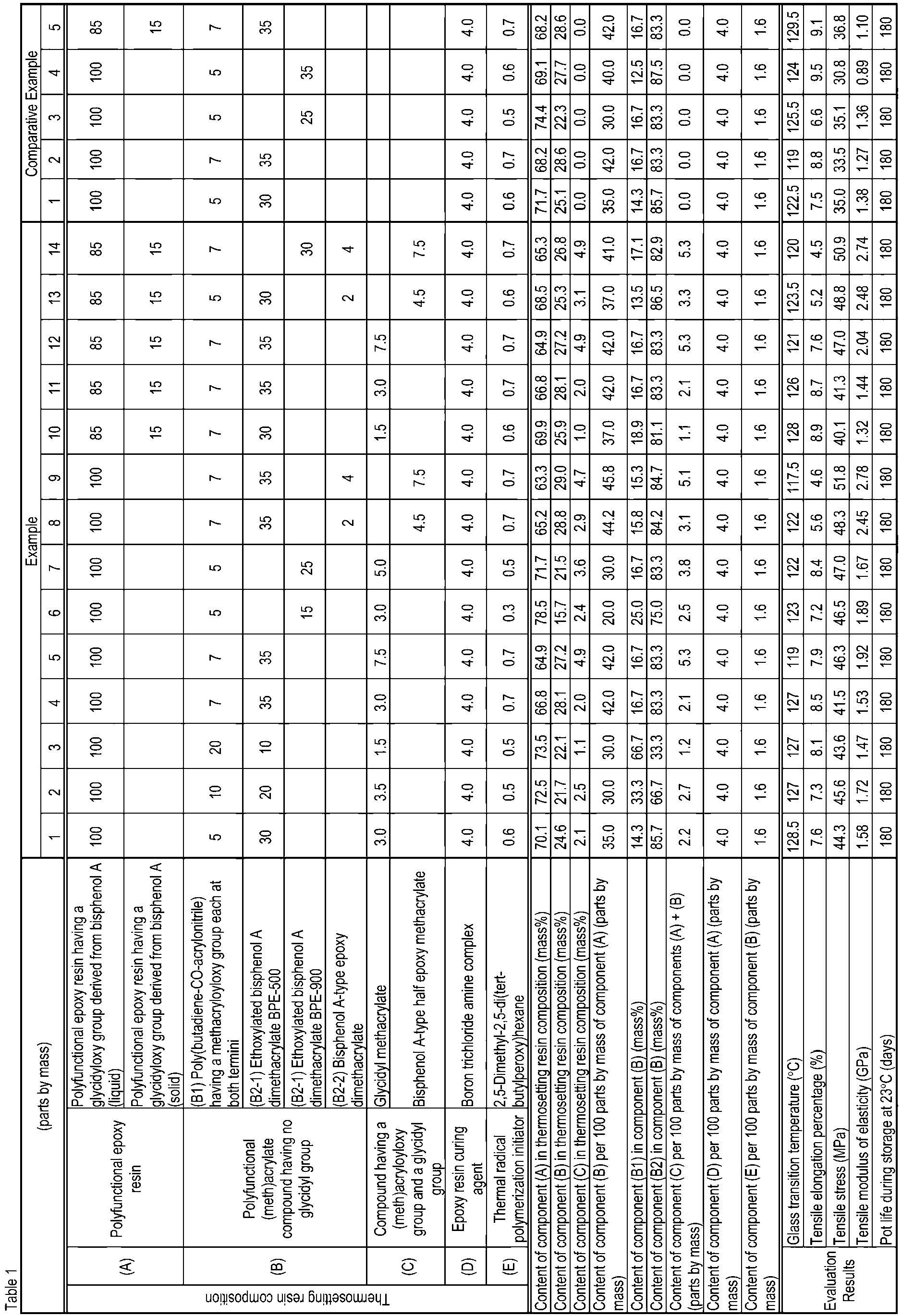

The components listed in Table 1 are as follows.

### < Polyfunctional epoxy resin (A)>

- Polyfunctional epoxy resin having a glycidyloxy group derived from bisphenol A (liquid): "jER828" available from Mitsubishi Chemical Corporation, a liquid epoxy resin, epoxy equivalent: 186 g/equivalent, s = 0.11 in the following structural formula
   Note that as for a composition obtained using bisphenol A-type half epoxy methacrylate ("BAEM-50" available from KSM Co., Ltd.) described later as the component (C), the "polyfunctional epoxy resin having a glycidyloxy group derived from bisphenol A (liquid)" contains bisphenol A diglycidyl ether contained (25 mass%) in "BAEM-50" in addition to "jER828".
- Polyfunctional epoxy resin having a glycidyloxy group derived from bisphenol A (solid): "jER1004" available from Mitsubishi Chemical Corporation, a polymer-type/solid epoxy resin, epoxy equivalent: 1026 g/equivalent, s = 6.0 in the following structural formula

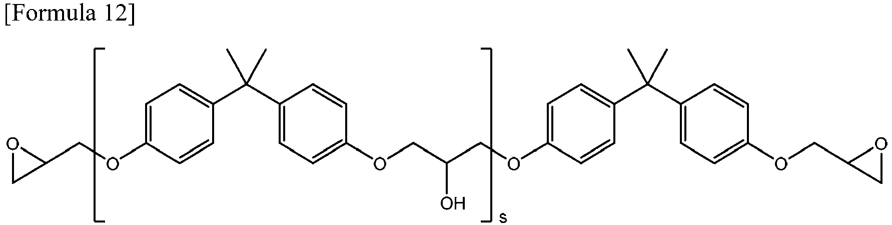

### <(Meth)acrylate compound (B) having no glycidyl group>

- (B1) Poly(butadiene-CO-acrylonitrile) having a methacryloyloxy group each at both termini: "Hypro 1300X33 LC" available from CHORI GLEX Co., Ltd.
- (B2-1) Ethoxylated bisphenol A dimethacrylate, k + l = about 10 in the following structural formula, "BPE-500" available from Shin-Nakamura Chemical Co., Ltd.
- (B2-1) Ethoxylated bisphenol A dimethacrylate, k + l = about 17 in the following structural formula, "BPE-900" available from Shin-Nakamura Chemical Co., Ltd. 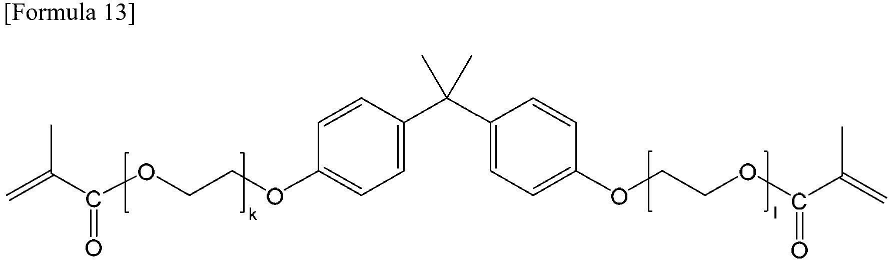
- (B2-2) Bisphenol A-type epoxy dimethacrylate, a compound represented by the following structural formula, contained (25 mass%) in "BAEM-50" available from KSM Co., Ltd.

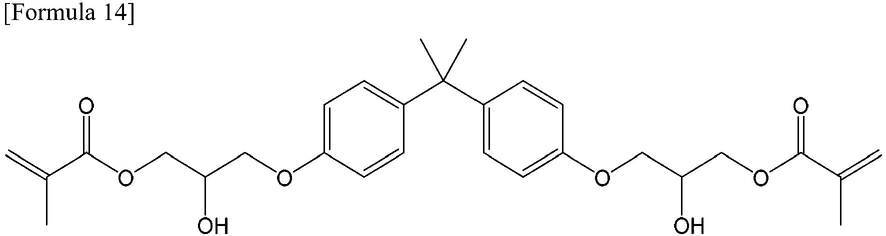

### <Compound (C) having a (meth)acryloyloxy group and a glycidyl group>

- Glycidyl methacrylate, available from Mitsubishi Gas Chemical Company Inc.
- Bisphenol A-type half epoxy methacrylate, a compound represented by the following structural formula, "BAEM-50" (the content of bisphenol A-type half epoxy methacrylate: 50 mass%) available from KSM Co., Ltd.

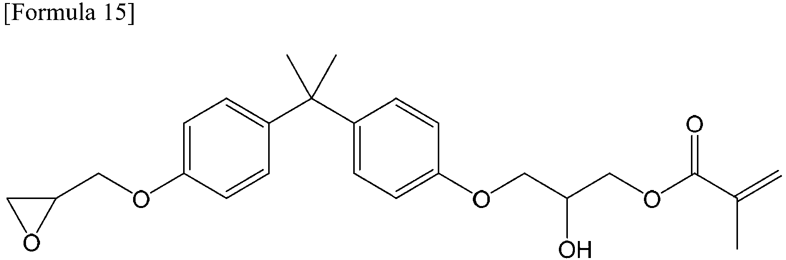

### <Epoxy resin curing agent (D)>

- Boron trichloride amine complex (amine component: N,N-dimethyl-n-octylamine), "Accelerator DY 9577" available from HUNTSMAN Corporation

### <Thermal radical polymerization initiator (E)>

- 2,5-Dimethyl-2,5-di(tert-butylperoxy)hexane, "PERHEXA 25B" available from NOF Corporation, 10-hour half-life temperature: 117.9°C

It can be seen from Table 1 that the cured products of the thermosetting resin composition of the present invention have achieved a glass transition temperature of 100°C or higher, a tensile elongation percentage of 4% or more, a tensile modulus of elasticity of 1.2 GPa or more, and a tensile stress of 40 MPa or more. The thermosetting resin composition also has a long pot life.

In contrast, all the cured products of the thermosetting resin compositions of Comparative Examples 1 to 5 which do not contain the component (C) had a tensile stress of less than 40 MPa. Furthermore, in Comparative Examples 4 and 5, the tensile modulus of elasticity also fell below 1.2 GPa, and no excellent mechanical properties were obtained.

### Industrial Applicability

The present invention can provide: a thermosetting resin composition which can provide a cured product having a high glass transition temperature, a high elongation percentage, a high tensile stress, and a high tensile modulus of elasticity and has a long pot life; a cured product thereof; a prepreg containing the thermosetting resin composition; a fiber-reinforced composite material; and a high-pressure gas container.

## Claims

1. A thermosetting resin composition comprising:
component (A): a polyfunctional epoxy resin;
component (B): a (meth)acrylate compound having no glycidyl group;
component (C): a compound having a (meth)acryloyloxy group and a glycidyl group;
component (D): an epoxy resin curing agent comprising a boron amine complex; and
component (E): a thermal radical polymerization initiator.

2. The thermosetting resin composition according to claim 1, wherein the component (B) comprises component (B1): a poly(butadiene-CO-acrylonitrile) having a (meth)acryloyloxy group each at both termini.

3. The thermosetting resin composition according to claim 1 or 2, wherein the component (B) comprises component (B2): a polyfunctional (meth)acrylate having an aromatic ring.

4. The thermosetting resin composition according to any one of claims 1 to 3, wherein the component (C) comprises a compound represented by the following general formula (1): 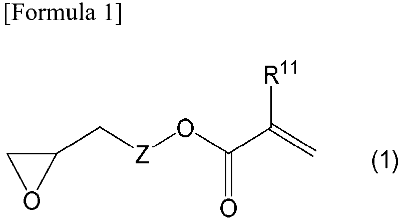
wherein in the formula (1), R¹¹ represents a hydrogen atom or a methyl group, and Z is a single bond, -(CH₂)ₘ-O- (m is a number of from 2 to 8), or a divalent group represented by the following general formula (2): 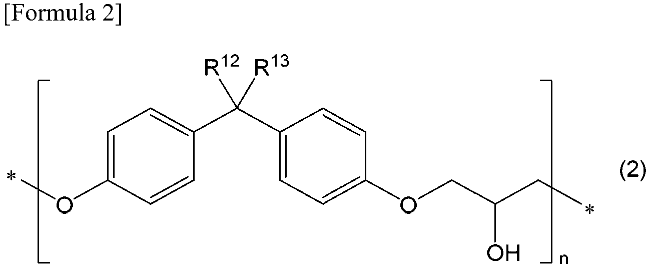
wherein in the formula (2), R¹² and R¹³ each independently represent a hydrogen atom or a methyl group, n is a number of from 1 to 5, and * represents a bonding site.

5. The thermosetting resin composition according to any one of claims 1 to 4, wherein the amine component in the boron amine complex is a trialkylamine.

6. A cured product of the thermosetting resin composition according to any one of claims 1 to 5.

7. A prepreg comprising the thermosetting resin composition according to any one of claims 1 to 5, and a reinforcing fiber.

8. The prepreg according to claim 7, wherein the reinforcing fiber is at least one selected from the group consisting of carbon fibers, glass fibers, and basalt fibers.

9. The prepreg according to claim 7 or 8, wherein the prepreg is a tow prepreg or a tape prepreg.

10. A fiber-reinforced composite material which is a cured product of the prepreg according to any one of claims 7 to 9.

11. A high-pressure gas container comprising the fiber-reinforced composite material according to claim 10.
